# EUROPEAN PATENT APPLICATION

(11) **EP 4 761 389 A1**
(43) Date of publication of application: **17.06.2026**
(21) Application number: 24861853.0
(22) Date of filing: 23.08.2024
(51) Int. Cl.: H04W 52/36

(54) **COMMUNICATION METHOD AND APPARATUS**

(30) Priority: 04.09.2023 CN 202311138875
(71) Applicant: HUAWEI TECHNOLOGIES CO., LTD., Shenzhen 518129 (CN)
(72) Inventor: GAO, Xiang, Shenzhen, Guangdong 518129 (CN); LIU, Xianda, Shenzhen, Guangdong 518129 (CN); ZHANG, Zhening, Shenzhen, Guangdong 518129 (CN); LI, Xi, Shenzhen, Guangdong 518129 (CN); LIU, Kunpeng, Shenzhen, Guangdong 518129 (CN)
(74) Representative: Thun, Clemens
(86) International application number: PCT/CN2024/114302
(87) International publication number: WO 2025/051009

(57) **Abstract**

This application relates to the field of communication technologies, and provides a communication method and apparatus, to perform power compensation on a network device side, improve accuracy of a channel estimation result, and improve communication performance. The method includes: A terminal device receives first indication information from a network device, and sends second indication information to the network device, where the first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

## Description

This application claims priority to Chinese Patent Application No. 202311138875.3, filed with the China National Intellectual Property Administration on September 4, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a terminal device may send an uplink reference signal to a network device, and the network device may perform uplink channel estimation based on the uplink reference signal, to obtain an uplink channel estimation result. The network device may further determine a downlink channel estimation result based on uplink and downlink channel reciprocity and the channel estimation result determined based on the uplink reference signal, to facilitate subsequent downlink transmission.

To obtain channel information corresponding to all antennas of the terminal device, the terminal device needs to send uplink reference signals through all the antennas. However, due to a limitation of a size and costs, a quantity of configured radio frequency chains (RF chains) or power amplifiers (PAs) of the terminal device is usually less than a quantity of antennas. Therefore, the uplink reference signals cannot be sent through all the antennas simultaneously to measure channel information of all the antennas. In this case, uplink reference signals may be sent and measured in an antenna switching (antenna switching, AS) manner. To be specific, channel measurement is performed by sending the uplink reference signals a plurality of times, and an uplink reference signal is sent to the network device through a different antenna of the terminal device each time. However, different power losses may exist between different antennas, and transmit power of uplink reference signals sent through different antennas is different. Consequently, when the network device performs channel estimation based on the uplink reference signals, a power difference exists between channel estimation results corresponding to the different antennas. Consequently, the channel estimation result does not match an actual channel, affecting communication performance.

Therefore, how to accurately obtain the power difference and perform compensation on a channel measurement result to improve accuracy of the channel estimation result and improve communication performance becomes a technical problem to be urgently resolved.

### SUMMARY

This application provides a communication method and apparatus, to perform power compensation on a network device side, improve accuracy of a channel estimation result, and improve communication performance.

According to a first aspect, this application provides a communication method. The method may be performed by a terminal device, may be performed by a component (for example, a processor, a chip, or a chip system) of the terminal device, or may be implemented by a logical module or software that can implement all or some functions of the terminal device. The following uses an example in which the method is performed by the terminal device. The method may include: receiving first indication information from a network device; and sending second indication information to the network device. The first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

According to the first aspect, the terminal device may send, by using the second indication information and based on the first indication information delivered by the network device, the power loss factor corresponding to the port configured for the terminal device to the network device. Sending the second indication information enables the network device to obtain the power loss factor reported by the terminal device, so that the power loss factor reported by the terminal device can be considered, to reduce a channel estimation error caused by power losses between antennas, improve accuracy of a channel estimation result, and improve communication performance.

In a possible design, the power loss factor reported by the terminal device is used to perform power compensation on a channel estimation result determined based on an uplink reference signal.

In a possible design, capability information is sent to the network device, where the capability information indicates that the terminal device supports reporting of the power loss factor corresponding to the port configured for the terminal device.

According to the possible design, the terminal device may notify, by reporting the capability information to the network device, the network device whether the terminal device can support reporting of the power loss factor, so that the network device can trigger the terminal device to flexibly report a power loss factor corresponding to a port on which power compensation needs to be performed.

In a possible design, the capability information includes third indication information, and the third indication information indicates a maximum value of the power loss factor corresponding to the port configured for the terminal device.

According to the possible design, the terminal device may further indicate, by using the third indication information, the maximum value of the power loss factor corresponding to the port of the terminal device, so that the network device determines, based on the maximum value and the power headroom report reported by the terminal device, whether the terminal device has the capability of performing complete power pre-compensation, to trigger the terminal device to report the power loss factor on a proper occasion, and avoid large reporting overheads caused by continuous reporting of the terminal device.

In a possible design, the first port is a reference port, or the first port is a neighboring port of the port.

The reference port may be a port whose port index is a specific port index. For example, the reference port may be a port whose port index is 0. The neighboring port of the port may be determined based on a port index of the port. For example, the port index of the port is k. The neighboring port of the port may be a port whose port index is k-1 or k+1.

In a possible design, fourth indication information is received from the network device, where the fourth indication information indicates the first port.

In a possible design, fifth indication information is sent to the network device, where the fifth indication information indicates the first port.

According to the foregoing three possible designs, the first port may be predefined in a protocol, or may be determined by the network device or the terminal device. This is not limited.

In a possible design, sending the second indication information to the network device includes: performing power compensation on an uplink reference signal corresponding to one or more ports of the terminal device, to determine transmit power corresponding to each port; determining, based on the transmit power corresponding to each port and transmit power corresponding to the first port, a power loss factor corresponding to each port; and sending the second indication information to the network device based on the power loss factor corresponding to each port.

According to the possible design, when determining the power loss factor corresponding to the port, the terminal device may flexibly perform complete power pre-compensation or partial power pre-compensation on each port based on actual power headroom and a transmit power requirement, and determine, based on transmit power obtained through power pre-compensation, the power loss factor corresponding to the port, to reduce, to the fullest extent, the channel estimation error caused by the power losses between antennas, improve the accuracy of the channel estimation result, and improve the communication performance.

According to a second aspect, this application provides a communication method. The method may be performed by a network device, may be performed by a component (for example, a processor, a chip, or a chip system) of the network device, or may be implemented by a logical module or software that can implement all or some functions of the network device. The following uses an example in which the method is performed by the network device. The method may include: sending first indication information to a terminal device, and receiving second indication information from the terminal device, where the first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

According to the second aspect, the network device may send the first indication information to the terminal device, to indicate the power loss factor corresponding to the port reported by the terminal device. Receiving the second indication information enables the network device to obtain the power loss factor reported by the terminal device, so that the power loss factor reported by the terminal device can be considered, to reduce a channel estimation error caused by power losses between antennas, improve accuracy of a channel estimation result, and improve communication performance.

In a possible design, the method further includes: performing, based on the power loss factor reported by the terminal device, power compensation on a channel estimation result determined based on an uplink reference signal.

In a possible design, sending the first indication information to the terminal device includes: receiving a power headroom report from the terminal device, where the power headroom report indicates power headroom or a power headroom range; and sending the first indication information to the terminal device when determining that the power headroom or the power headroom range meets a first condition.

According to the possible design, the network device may determine, based on the power headroom or the power headroom range reported by the terminal device, whether the terminal device has a capability of performing complete power pre-compensation on the power losses between antennas. When the network device determines that the power headroom or the power headroom range reported by the terminal device meets the first condition, it indicates that expected transmit power of an SRS signal does not have sufficient transmit power headroom compared with a maximum transmit power limitation of the terminal device, and the terminal device cannot perform complete power pre-compensation on the power losses between antennas (for example, the terminal device cannot perform power pre-compensation on the power losses between antennas at all, or the terminal device can perform pre-compensation only on a part of the power loss based on maximum transmit power and cannot perform complete pre-compensation). In this case, the network device may send the first indication information to the terminal device, to indicate the terminal device to report the power loss factor corresponding to the port, and the network device performs, based on the power loss factor corresponding to the port, power compensation on the channel estimation result determined based on the SRS signal, to reduce the channel estimation error caused by the power losses between antennas, improve the accuracy of the channel estimation result, and improve the communication performance.

In a possible design, that the power headroom or the power headroom range meets the first condition includes: The power headroom is less than a first threshold; a minimum value of the power headroom range is less than a second threshold; or a maximum value of the power headroom range is less than a third threshold.

In a possible design, the first threshold, the second threshold, or the third threshold is predefined; or the first threshold, the second threshold, or the third threshold is determined based on a maximum value of the power loss factor corresponding to the port configured for the terminal device.

According to the foregoing two possible designs, a plurality of feasible solutions are provided for the network device to determine whether the power headroom or the power headroom range reported by the terminal device meets the first condition.

In a possible design, before sending the first indication information to the terminal device, the method further includes: receiving capability information from the terminal device, where the capability information indicates that the terminal device supports reporting of the power loss factor corresponding to the port configured for the terminal device.

According to the possible design, the terminal device may notify, by reporting the capability information to the network device, the network device whether the terminal device can support reporting of the power loss factor, so that the network device can trigger the terminal device to flexibly report a power loss factor corresponding to a port on which power compensation needs to be performed.

In a possible design, the capability information includes third indication information, and the third indication information indicates the maximum value of the power loss factor corresponding to the port configured for the terminal device.

According to the possible design, the terminal device may further indicate, by using the third indication information, the maximum value of the power loss factor corresponding to the port of the terminal device, so that the network device determines, based on the maximum value and the power headroom report reported by the terminal device, whether the terminal device has the capability of performing complete power pre-compensation, to trigger the terminal device to report the power loss factor on a proper occasion, and avoid large reporting overheads caused by continuous reporting of the terminal device.

In a possible design, the first port is a reference port, or the first port is a neighboring port of the port.

The reference port may be a port whose port index is a specific port index. For example, the reference port may be a port whose port index is 0. The neighboring port of the port may be determined based on a port index of the port. For example, the port index of the port is k. The neighboring port of the port may be a port whose port index is k-1 or k+1.

In a possible design, fourth indication information is sent to the terminal device, where the fourth indication information indicates the first port.

In a possible design, fifth indication information is received from the terminal device, where the fifth indication information indicates the first port.

According to the foregoing three possible designs, the first port may be predefined in a protocol, or may be determined by the network device or the terminal device. This is not limited.

According to a third aspect, this application provides a communication apparatus. The communication apparatus may be used in the terminal device in the first aspect, to implement the function performed by the terminal device. The communication apparatus may be the terminal device, or may be a chip, a chip system, a system on chip, or the like of the terminal device. The communication apparatus may perform, by hardware or by hardware executing corresponding software, the function performed by the terminal device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module may be configured to receive first indication information from a network device, and may be further configured to send second indication information to the network device. The first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

In a possible design, the power loss factor reported by the terminal device is used to perform power compensation on a channel estimation result determined based on an uplink reference signal.

In a possible design, the transceiver module is further configured to send capability information to the network device, where the capability information indicates that the terminal device supports reporting of the power loss factor corresponding to the port configured for the terminal device.

In a possible design, the capability information includes third indication information, and the third indication information indicates a maximum value of the power loss factor corresponding to the port configured for the terminal device.

In a possible design, the first port is a reference port, or the first port is a neighboring port of the port.

In a possible design, the transceiver module is further configured to receive fourth indication information from the network device, where the fourth indication information indicates the first port.

In a possible design, the transceiver module is further configured to send fifth indication information to the network device, where the fifth indication information indicates the first port.

In a possible design, the processing module is configured to perform power compensation on an uplink reference signal corresponding to one or more ports of the terminal device, to determine transmit power corresponding to each port; the processing module is further configured to determine, based on the transmit power corresponding to each port and transmit power corresponding to the first port, a power loss factor corresponding to each port; and the transceiver module is further configured to send the second indication information to the network device based on the power loss factor corresponding to each port.

Optionally, the transceiver module and the processing module of the communication apparatus in the third aspect may further perform corresponding functions in any one of the possible designs of the first aspect. For details, refer to the detailed descriptions in the method examples. For beneficial effects that can be achieved, refer to the foregoing related content.

According to a fourth aspect, this application provides a communication apparatus. The communication apparatus may be used in the network device in the second aspect, to implement a function performed by the network device. The communication apparatus may be the network device, or may be a chip, a chip system, a system on chip, or the like of the network device. The communication apparatus may perform, by hardware or by hardware executing corresponding software, the function performed by the network device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

The transceiver module may be configured to send first indication information to a terminal device, and may be further configured to receive second indication information from the terminal device. The first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

In a possible design, the processing module is configured to perform power compensation on an uplink reference signal from the terminal device based on the power loss factor.

In a possible design, the transceiver module is further configured to receive a power headroom report from the terminal device, where the power headroom report indicates power headroom or a power headroom range; and the transceiver module is further configured to send the first indication information to the terminal device when the processing module determines that the power headroom or the power headroom range meets a first condition.

In a possible design, that the power headroom or the power headroom range meets the first condition includes: The power headroom is less than a first threshold; a minimum value of the power headroom range is less than a second threshold; or a maximum value of the power headroom range is less than a third threshold.

In a possible design, the first threshold, the second threshold, or the third threshold is predefined; or the first threshold, the second threshold, or the third threshold is determined based on a maximum value of the power loss factor corresponding to the port configured for the terminal device.

In a possible design, the transceiver module is further configured to receive capability information from the terminal device, where the capability information indicates that the terminal device supports reporting of the power loss factor corresponding to the port configured for the terminal device.

In a possible design, the capability information includes third indication information, and the third indication information indicates a maximum value of the power loss factor corresponding to the port configured for the terminal device.

In a possible design, the first port is a reference port, or the first port is a neighboring port of the port.

In a possible design, the transceiver module is further configured to send fourth indication information to the terminal device, where the fourth indication information indicates the first port.

In a possible design, the transceiver module is further configured to receive fifth indication information from the terminal device, where the fifth indication information indicates the first port.

Optionally, the transceiver module and the processing module of the communication apparatus in the fourth aspect may further perform corresponding functions in any one of the possible designs of the second aspect. For details, refer to the detailed descriptions in the method examples. For beneficial effects that can be achieved, refer to the foregoing related content.

According to a fifth aspect, this application provides a communication apparatus. The communication apparatus includes one or more processors. The one or more processors are configured to run a computer program or instructions. When the one or more processors execute the computer instructions or the instructions, the communication apparatus is caused to perform the communication method in the first aspect or any one of the possible designs of the first aspect, or perform the communication method in the second aspect or any one of the possible designs of the second aspect.

In a possible design, the communication apparatus further includes one or more storages, the one or more storages are coupled to the one or more processors, and the one or more storages are configured to store the foregoing computer program or instructions. In a possible implementation, the storage is located outside the communication apparatus. In another possible implementation, the storage is located inside the communication apparatus. In this application, the processor and the storage may alternatively be integrated into one device. In other words, the processor and the storage may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixth aspect, this application provides a communication apparatus. The communication apparatus includes an input/output interface and a logic circuit. The input/output interface is configured to input and/or output information. The logic circuit is configured to perform the communication method in the first aspect or any one of the possible designs of the first aspect, or perform the communication method in the second aspect or any one of the possible designs of the second aspect, and perform processing based on the information and/or generate the information.

According to a seventh aspect, this application provides a computer-readable storage medium. The computer-readable storage medium stores computer instructions or a program. When the computer instructions or the program runs on a computer, the communication method in the first aspect or any one of the possible designs of the first aspect is performed, or the communication method in the second aspect or any one of the possible designs of the second aspect is performed.

According to an eighth aspect, this application provides a computer program product including computer instructions. When the computer program product runs on a computer, the communication method in the first aspect or any one of the possible designs of the first aspect is performed, or the communication method in the second aspect or any one of the possible designs of the second aspect is performed.

According to a ninth aspect, this application provides a computer program. When the computer program runs on a computer, the communication method in the first aspect or any one of the possible designs of the first aspect is performed, or the communication method in the second aspect or any one of the possible designs of the second aspect is performed.

According to a tenth aspect, this application provides a chip, including a processor. The processor is coupled to a storage, the storage is configured to store a program or instructions, and when the program or the instructions are executed by the processor, the chip is caused to perform the communication method in the first aspect or any one of the possible designs of the first aspect, or perform the communication method in the second aspect or any one of the possible designs of the second aspect.

For technical effects brought by any design manner of the fifth aspect to the tenth aspect, refer to the technical effects brought by the first aspect or any one of the possible designs of the first aspect, or refer to the technical effects brought by the second aspect or any one of the possible designs of the second aspect. Details are not described again.

According to an eleventh aspect, this application provides a communication system. The communication system may include the communication apparatus in the third aspect or any one of the possible designs of the third aspect and the communication apparatus in the fourth aspect or any one of the possible designs of the fourth aspect.

### BRIEF DESCRIPTION OF DRAWINGS

FIG. 1 is a diagram of a terminal device according to an embodiment of this application;
FIG. 2 is a diagram of a communication system according to an embodiment of this application;
FIG. 3 is a diagram of a communication apparatus according to an embodiment of this application;
FIG. 4 is a flowchart of a communication method according to an embodiment of this application;
FIG. 5 is a diagram of a communication method according to an embodiment of this application;
FIG. 6 is a diagram of a communication method according to an embodiment of this application;
FIG. 7 is a diagram of a communication method according to an embodiment of this application;
FIG. 8 is a diagram of composition of a communication apparatus according to an embodiment of this application; and
FIG. 9 is a diagram of composition of a communication apparatus according to an embodiment of this application.

### DESCRIPTION OF EMBODIMENTS

Before embodiments of this application are described, technical terms used in embodiments of this application are described.

A sounding reference signal (sounding reference signal, SRS) is an uplink reference signal sent by a terminal device to a network device, and is a key reference signal used by the network device to obtain a channel estimation result (or referred to as channel information, channel state information, or the like). After receiving the SRS signal sent by the terminal device, the network device may perform channel estimation based on the SRS signal, to obtain an uplink (uplink, UL) channel estimation result from the terminal device to the network device. If channel reciprocity (for example, a time division duplexing (time division duplexing, TDD) system) exists between uplink and downlink channels, the network device may further determine, based on the channel reciprocity and the uplink channel estimation result, a downlink channel estimation result from the network device to the terminal device. After determining the downlink channel estimation result corresponding to the terminal device, the network device may perform data transmission resource scheduling or precoding processing on the terminal device based on the downlink channel estimation result.

A port may also be referred to as a port of an uplink reference signal, an uplink reference signal port, an SRS port, an antenna port, or the like. Each port in embodiments of this application may be replaced with any one of the foregoing descriptions. This is not limited. Each port may correspond to one terminal antenna or one terminal antenna port. The uplink reference signal may be the SRS, or may be another reference signal, for example, a demodulation reference signal (demodulation reference signal, DMRS) or a phase-tracking reference signal (phase-tracking reference signal, PTRS). The port may be used to carry the SRS signal, and each port corresponds to one SRS signal. Different ports may be multiplexed in a code division manner, a frequency division manner, a time division manner, or a space division manner. In an implementation, one SRS resource may include ${N}_{ap}^{SRS} ∈ \left\{1, 2, 4, 8\right\}$ SRS ports, and each SRS port corresponds to a configured time/frequency/code domain resource. Each SRS port usually occupies a different time/frequency/code domain resource, to reduce mutual interference. Each SRS port corresponds to one antenna (for example, one physical antenna or one virtual antenna) of the terminal device. The antenna may also be referred to as an antenna of the terminal device, a transmit antenna of the terminal device, an antenna port of the terminal device, a transmit antenna port of the terminal device, or the like. This is not limited.

For example, the terminal device has four antennas. If the terminal device is configured with four radio frequency chains (radio frequency chains, RF chains), the terminal device has a four-antenna transmission capability, and may be referred to as a 4-transmit 4-receive (4T4R) terminal device. The terminal device may send four-port SRS signals, and each port corresponds to one antenna. The network device performs channel estimation based on the four-port SRS signals sent by the terminal device, to obtain uplink channel estimation results *H_{UL}* corresponding to the four antennas of the terminal device, and may obtain, by using uplink and downlink channel reciprocity, downlink channel estimation results *H_{DL}* corresponding to the four antennas of the terminal device.

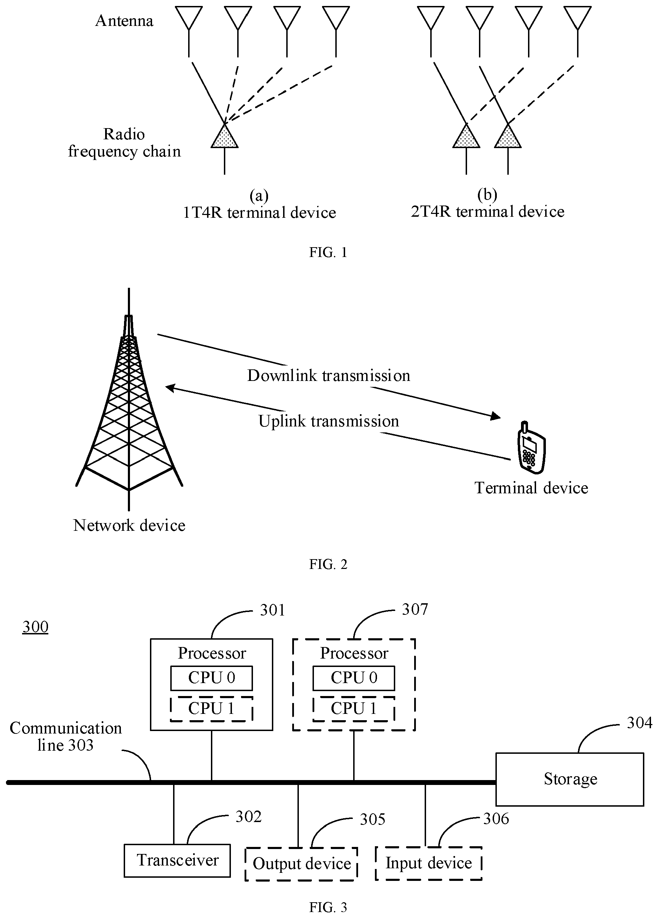

Due to a limitation of a size and costs, a quantity of configured radio frequency chains or power amplifiers (power amplifiers, PAs) of the terminal device is usually less than a quantity of antennas. For example, as shown in (a) in FIG. 1, the terminal device is disposed with four antennas. When receiving a downlink signal, the terminal device may receive the signal through the four antennas. However, the terminal device is configured with only one radio frequency chain. When sending an uplink signal, the terminal device may send the signal through only one transmit antenna at a same moment. This terminal device is usually referred to as a 1T4R terminal device. To obtain complete channel estimation results corresponding to all the antennas, the 1T4R terminal device needs to switch between different antennas at different moments to send SRS signals, that is, perform SRS antenna selection, which is also referred to as SRS antenna switching (SRS antenna switching). For example, the network device may configure four SRS resources for the terminal device, and each SRS resource corresponds to one antenna. At different SRS signal sending moments, the terminal device may send the configured four SRS resources through four antennas in turn. Therefore, SRS signals need to be sent at least four times, to obtain channel estimation results corresponding to the four antennas.

Similarly, a 2T4R terminal device shown in (b) in FIG. 1 is disposed with four antennas and two radio frequency chains. The network device may configure two SRS resources for the terminal device. Each SRS resource corresponds to one group of antennas, and each group of antennas includes two antennas. At different SRS signal sending moments, the terminal device may send the configured two SRS resources through two groups of antennas in turn. Therefore, SRS signals need to be sent at least twice, to obtain channel estimation results corresponding to the four antennas.

For an nTmR terminal device (n < m), the radio frequency chain needs to be switched between different antennas through a switch. Therefore, an insertion loss (insertion loss, IL) exists. In addition, considering a size and a usage scenario of the terminal device, antennas are usually distributed at different positions of the terminal device, and therefore, line cabling distances between different antennas and different radio frequency chains are also different. The foregoing factors cause different power losses between different antennas of the nTmR terminal device.

A power loss between a specific antenna and another antenna may be referred to as a power loss factor corresponding to the specific antenna. The power loss factor (a unit may be dB) may be a power difference between the specific antenna and the another antenna, or may be a power ratio between the specific antenna and the another antenna (for example, the following *a*₁, *a*₂, *a*₃, *a*₄, and the like). This is not limited.

A 1T4R terminal device is used as an example. It is assumed that transmit power corresponding to a main antenna is P. When three remaining antennas perform sending at same transmit power, corresponding actual transmit power is *a*₁*P, a*₂*P,* and *a*₃*P* respectively, and 0 < *a*₁ ≤ 1, 0 < *a*₂ ≤ 1, and 0 < *a*₃ ≤ 1, for example, *a*₁ = *a*₂ = *a*₃ = 0.5. *a*₁, *a*₂, and *a*₃ are respectively power ratios between the remaining three antennas and the main antenna, that is, *a*₁, *a*₂, and *a*₃ are power loss factors respectively corresponding to the remaining three antennas.

It may be understood that, because each port corresponds to one antenna of the terminal device, the power loss factor may alternatively be defined from a perspective of the port, to be specific, the power loss factor may be a power difference or a power ratio between a specific port and another port, and the power loss factor may also be referred to as a power loss factor corresponding to the port.

In the TDD system, the downlink channel estimation result is obtained by sending an uplink SRS signal. For the nTmR terminal device (n < m), considering that different antennas may correspond to different power loss factors, when SRS antennas are switched for sending, power at which different antennas actually send SRS signals may be different. This causes a power difference between channel estimation results corresponding to different antennas when the network device performs channel estimation based on the SRS signals. Consequently, the channel estimation result does not match an actual channel (in other words, an uplink channel estimation result does not match an actual uplink channel, and a downlink channel estimation result does not match an actual downlink channel), affecting communication performance. For example, because precoding and scheduling during downlink transmission directly depend on the channel estimation result that is based on the SRS signal, that the downlink channel estimation result does not match the downlink channel directly affects downlink transmission performance.

For example, in a case of perfect uplink and downlink channel reciprocity, downlink channel estimation results need to be the following *H_{DL}.* However, because a power difference may exist between channel estimation results corresponding to different antennas, downlink channel estimation results obtained through SRS signal estimation are the following *Ĥ_{DL},* and the downlink channel estimation result does not match an actual downlink channel, affecting downlink transmission performance. ${H}_{DL} = {H}_{UL}^{T} = \left[\begin{matrix}{H}_{1} \\ {H}_{2} \\ {H}_{3} \\ {H}_{4}\end{matrix}\right] ; and {\hat{H}}_{DL} = {H}_{SRS}^{T} = \left[\begin{matrix}1 & 0 & 0 & 0 \\ 0 & {a}_{1} & 0 & 0 \\ 0 & 0 & {a}_{2} & 0 \\ 0 & 0 & 0 & {a}_{3}\end{matrix}\right] \left[\begin{matrix}{H}_{1} \\ {H}_{2} \\ {H}_{3} \\ {H}_{4}\end{matrix}\right] .$

*H_{UL}* represents uplink channel estimation results, *T* represents transpose, *H_{SRS}* represents the uplink channel estimation results determined based on the SRS signals, 1, *a*₁, *a*₂, and *a*₃ respectively represent power loss factors corresponding to the different antennas, and *H*₁, *H*₂, *H*₃, and *H*₄ respectively represent channel estimation results corresponding to the different antennas.

To resolve the foregoing problem, it is proposed that when sending the SRS signal, the terminal device may perform power pre-compensation based on a power loss corresponding to each antenna.

The terminal device may learn of, in advance based on a hardware feature of the antenna, an insertion loss caused by line cabling and a switch of each antenna, that is, learn of the power loss corresponding to each antenna. In an implementation, to achieve a state of transmit power balance between antennas, the terminal device may use, based on the learned power loss corresponding to each antenna, different transmit power for different antennas when sending the SRS signals, to perform power pre-compensation on power losses caused by insertion losses when sending the SRS signals, to effectively avoid a channel estimation error caused by the power losses between antennas, avoid mismatch between the channel estimation result and an actual channel, and improve communication performance.

For example, the terminal device is a 1T4R terminal device. It is assumed that power loss factors corresponding to four antennas of the terminal device are respectively *a*₁ = 1 and *a*₂ = *a*₃ = *a*₄ *=* 0.5. After the terminal device sends SRS signals through the four antennas, signals received by the network device may be the following *y*. When the power loss factors are known, the terminal device may perform power pre-compensation on transmit power of each antenna. After the power pre-compensation is performed, signals received by the network device may be the following *y*'. It can be learned that power losses between different antennas are equivalently equalized after the power pre-compensation is performed, to effectively avoid a channel estimation error caused by the power losses between the antennas: $y = H \left(\begin{matrix}{s}_{1} \\ {a}_{2} {s}_{2} \\ {a}_{3} {s}_{3} \\ {a}_{4} {s}_{4}\end{matrix}\right) + n ;$ and $y ′ = H \left(\begin{matrix}\begin{matrix}1 & 0 \\ 0 & 1 / {a}_{2}\end{matrix} & \begin{matrix}0 & 0 \\ 0 & 0\end{matrix} \\ \begin{matrix}0 & 0 \\ 0 & 0\end{matrix} & \begin{matrix}1 / {a}_{3} & 0 \\ 0 & 1 / {a}_{4}\end{matrix}\end{matrix}\right) \left(\begin{matrix}{s}_{1} \\ {a}_{2} {s}_{2} \\ {a}_{3} {s}_{3} \\ {a}_{4} {s}_{4}\end{matrix}\right) + n = H \left(\begin{matrix}{s}_{1} \\ {s}_{2} \\ {s}_{3} \\ {s}_{4}\end{matrix}\right) + n .$

*H* represents a channel matrix corresponding to the four antennas, *s*₁, *s*₂, *s*₃, and *s*₄ respectively represent the SRS signals that are correspondingly sent through the four antennas, *n* represents a corresponding noise vector, and $\left(\begin{matrix}\begin{matrix}1 & 0 \\ 0 & 1 / {a}_{2}\end{matrix} & \begin{matrix}0 & 0 \\ 0 & 0\end{matrix} \\ \begin{matrix}0 & 0 \\ 0 & 0\end{matrix} & \begin{matrix}1 / {a}_{3} & 0 \\ 0 & 1 / {a}_{4}\end{matrix}\end{matrix}\right)$ represents a power pre-compensation matrix.

Based on the foregoing descriptions, the power pre-compensation of the terminal device actually needs larger power to be transmitted on an antenna with a power loss, to offset the power loss. However, when actually sending the SRS signal, the terminal device is limited by maximum transmit power. Therefore, the terminal device cannot perform power pre-compensation in all scenarios. When the terminal device determines, based on the maximum transmit power, that power pre-compensation cannot be performed, or power that can be used for compensation through power pre-compensation is limited, and complete power pre-compensation cannot be performed, a problem in which a channel estimation result does not match an actual channel still exists, affecting communication performance.

For example, when a path loss between the terminal device and the network device is large (for example, the terminal device is a remote user or a cell edge user), transmit power of an SRS signal determined by the terminal device may have reached full power (that is, reach the maximum transmit power). In this case, there is no power headroom that can be used for power pre-compensation of the terminal device. Alternatively, when power losses between the antennas of the terminal device are greater than transmit power headroom of SRS signals, the power losses between the antennas cannot be completely compensated for through power pre-compensation. In this case, a problem in which a channel estimation result obtained by the network device through SRS signal measurement does not match an actual channel may still exist. Consequently, performance of subsequent downlink transmission is directly affected.

To resolve the technical problem, an embodiment of this application provides a communication method. In the method, a terminal device receives first indication information from a network device, and sends second indication information to the network device. The first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

In this embodiment of this application, the terminal device may send, to the network device, the power loss factor corresponding to the port configured for the terminal device, so that the network device can obtain the power loss factor reported by the terminal device, and the power loss factor reported by the terminal device can be considered. For example, the network device performs, based on the power loss factor reported by the terminal device, power compensation on a channel estimation result determined based on an uplink reference signal (for example, an SRS signal), to reduce a channel estimation error caused by power losses between antennas, improve accuracy of the channel estimation result, and improve communication performance.

For ease of understanding embodiments of this application, the following points are first described.
(1) "Sending" and "receiving" in embodiments of this application represent signal transmission directions. For example, "sending information to XX" may be understood as that a destination end of the information is the XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modular components, chips, software modules, or hardware modules inside the device through a bus, a cable, or an interface.

It may be understood that necessary processing, such as encoding and modulation, may be performed on the information between the source end at which the information is sent and the destination end, but the destination end may understand valid information from the source end. Similar descriptions in this application may be understood similarly. Details are not described again.

(2) In embodiments of this application, "indication" may include a direct indication and an indirect indication, or may include an explicit indication and an implicit indication. Information indicated by specific information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and a remaining part of the to-be-indicated information is known or pre-agreed on. For example, specific information may alternatively be indicated by using an arrangement sequence of pieces of information that is pre-agreed on (for example, predefined in a protocol), to reduce indication overheads to a specific extent. A specific indication manner is not limited in this application. It may be understood that, for a sender of the indication information, the indication information may indicate the to-be-indicated information, and for a receiver of the indication information, the indication information may be used for determining the to-be-indicated information.

The following describes implementations of embodiments of this application in detail with reference to accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system, or may be a fifth generation (fifth generation, 5G) mobile communication system, a system with hybrid networking of LTE and 5G, a new radio (new radio, NR) system, an NR vehicle-to-everything (vehicle-to-everything, V2X) system, a TDD system, and a frequency division duplex (frequency-division duplex, FDD) system, a device-to-device (device-to-device, D2D) communication system, a machine-to-machine (machine-to-machine, M2M) communication system, an internet of things (internet of things, IoT), a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, enhanced mobile broadband (enhanced mobile broadband, eMBB), ultra-reliable and low-latency communication (ultra-reliable and low-latency communication, URLLC), enhanced machine-type communication (enhanced machine-type communication, eMTC), and various types of next-generation communication systems, such as a sixth generation (sixth generation, 6G) mobile communication system, or may be a non-terrestrial network (non-terrestrial network, NTN) system, a non-3GPP communication system, or the like. This is not limited.

Embodiments of this application may be applied to a communication scenario like a homogeneous network scenario, a heterogeneous network scenario, a coordinated multipoint transmission scenario (for example, a macro base station and a macro base station, a micro base station and a micro base station, or a macro base station and a micro base station), a low frequency (sub 6G) scenario, a high frequency (above 6G) scenario, a single transmission reception point (single transmission reception point, Single-TRP) scenario, a multi-TRP (Multi-TRP) scenario, or any scenario derived from a single-TRP or a multi-TRP. This is not limited.

The following uses FIG. 2 as an example to describe a communication system provided in an embodiment of this application.

FIG. 2 is a diagram of a communication system according to an embodiment of this application. As shown in FIG. 2, the communication system may include one or more terminal devices and one or more network devices.

In FIG. 2, the terminal device may be located in beam/cell coverage of the network device, and the network device may provide a communication service for the terminal device.

The terminal device in FIG. 2 may be a device having a wireless transceiver function or a chip or a chip system that can be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 2 may be a mobile phone (mobile phone), a tablet computer, or a computer with a wireless transceiver function. Alternatively, the terminal device may be a user station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital processing (personal digital assistant, PDA), a handheld device having a wireless communication function, a compute device, a processing device connected to a wireless modem, a vehicle-mounted device, a wearable device, a terminal device in the internet of things, household appliance, a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, a terminal device in a future network, a terminal device in a future evolved public land mobile network (public land mobile network, PLMN), or the like. This is not limited.

The network device in FIG. 2 may be any device that is deployed in an access network and that can perform wireless communication with a terminal device, or may be a chip or a chip system that can be disposed in the device, or may be a logical node or a logical module or a function implemented by software, and may be configured to implement functions such as a radio physical control function, resource scheduling and radio resource management, radio access control, and mobility management. Specifically, the network device may be a device supporting wired access, or may be a device supporting wireless access.

For example, the network device may include one or more access network (access network, AN)/radio access network (radio access network, RAN) nodes. The AN/RAN node may be a base station (NodeB, NB), a macro base station, a micro base station (or described as a small cell), a pico base station, a balloon station, a relay station, an enhanced base station (enhance NodeB, eNB), a next generation NodeB (next generation NodeB, gNB), a home base station (for example, a home evolved NodeB, or a home NodeB, HNB), a base station in a 5G communication system, a base station in a future mobile communication system, an access point (access point, AP), a TRP, a transmission point (transmission point, TP) in a wireless fidelity (wireless fidelity, Wi-Fi) system, a transmission measurement function (transmission measurement function, TMF), a radio network controller (radio network controller, RNC), a base station controller (base station controller, BSC), a base transceiver station (base transceiver station, BTS), a wearable device, a vehicle-mounted device, another access node, or the like. This is not limited.

In still another example, the network device may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components in a rack.

In still another example, the network device may alternatively be a device including a central unit (central unit, CU) node, including a distributed unit (distributed unit, DU) node, or including a CU node and a DU node. For example, the network device may be divided into a CU and a DU from a perspective of logical functions. Some protocol layer functions are centrally controlled by the CU, and a part or all of the remaining protocol layer functions are distributed in the DU, and the CU centrally controls the DU. Further, the central unit CU may be further divided into a control plane (CU-CP) and a user plane (CU-UP). In different systems, the CU (including the CU-CP or the CU-UP) or the DU may have different names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

It should be noted that the terminal device and the network device in embodiments of this application each may be one or more chips, or may be a system on chip (system on chip, SoC), or the like. FIG. 2 is merely an example accompany drawing, and a quantity of devices included in FIG. 2 is not limited. In addition, in addition to the devices shown in FIG. 2, the communication system may further include another device, for example, may further include a wireless relay device and a wireless backhaul device. Names of devices and chains in FIG. 2 are not limited. In addition to the names shown in FIG. 2, the devices and the chains may alternatively have other names. This is not limited.

During specific implementation, as shown in FIG. 2, for example, each terminal device or each network device may use a composition structure shown in FIG. 3, or include components shown in FIG. 3. FIG. 3 is a schematic composition diagram of a communication apparatus 300 according to an embodiment of this application. The communication apparatus 300 may be a terminal device, or a chip or a system on chip in the terminal device, or may be a network device, or a chip or a system on chip in the network device. As shown in FIG. 3, the communication apparatus 300 includes a processor 301, a transceiver 302, and a communication line 303.

Further, the communication apparatus 300 may further include a storage 304. The processor 301, the storage 304, and the transceiver 302 may be connected through the communication line 303.

The processor 301 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The transceiver 302 is configured to communicate with another device or another communication network. The another communication network may be an Ethernet, a radio access network (radio access network, RAN), a wireless local area network (wireless local area network, WLAN), or the like. The transceiver 302 may be a module, a circuit, a transceiver, or any apparatus that can implement communication.

The communication line 303 is configured to transmit information between components included in the communication apparatus 300.

The storage 304 is configured to store instructions. The instructions may be computer programs.

The storage 304 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), magnetic disk storage medium or another magnetic storage device, or the like. This is not limited.

It should be noted that the storage 304 may exist independently of the processor 301, or may be integrated with the processor 301. The storage 304 may be configured to store the instructions, program code, some data, or the like. The storage 304 may be located inside the communication apparatus 300, or may be located outside the communication apparatus 300. This is not limited. The processor 301 is configured to execute the instructions stored in the storage 304, to implement the communication method provided in the following embodiments of this application.

In an example, the processor 301 may include one or more CPUs, for example, a CPU 0 and a CPU 1 in FIG. 3.

In an optional implementation, the communication apparatus 300 includes a plurality of processors. For example, in addition to the processor 301 in FIG. 3, the communication apparatus 300 may further include a processor 307.

In an optional implementation, the communication apparatus 300 further includes an output device 305 and an input device 306. For example, the input device 306 is a device like a keyboard, a mouse, a microphone, or a joystick, and the output device 305 is a device like a display or a speaker (speaker).

It should be noted that the communication apparatus 300 may be a desktop computer, a portable computer, a network server, a mobile phone, a tablet computer, a wireless terminal, an embedded device, a chip system, or a device having a similar structure in FIG. 3. In addition, the composition structure shown in FIG. 3 does not constitute a limitation on the communication apparatus. In addition to the components shown in FIG. 3, the communication apparatus may include more or fewer components than the components shown in the figure, or some components may be combined, or there may be a different component arrangement.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

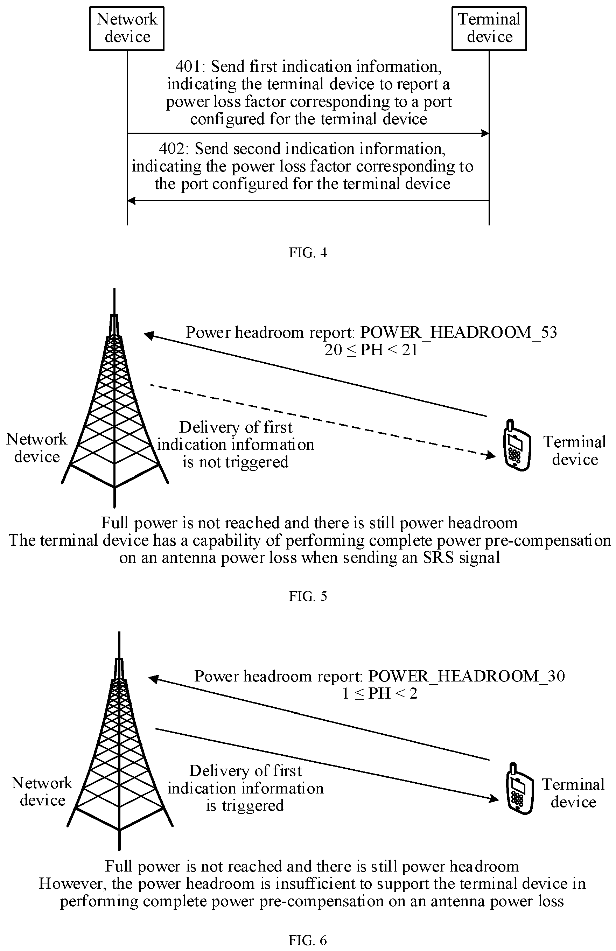

With reference to the communication system shown in FIG. 2, a communication method provided in an embodiment of this application is described with reference to FIG. 4. A terminal device may be any terminal device in the communication system shown in FIG. 2, and a network device may be a serving network device of the terminal device, or the terminal device is described as belonging to the network device. The terminal device and the network device described in the following embodiments may have the components shown in FIG. 3. Processing performed by a single execution body (the terminal device or the network device) shown in this embodiment of this application may alternatively be performed by a plurality of execution bodies. These execution bodies may be logically and/or physically separated. This is not limited.

FIG. 4 is a flowchart of a communication method according to an embodiment of this application. As shown in FIG. 4, the method may include the following steps.

Step 401: A network device sends first indication information to a terminal device; and correspondingly, the terminal device receives the first indication information from the network device.

The first indication information may indicate the terminal device to report a power loss factor corresponding to a port configured for the terminal device. The power loss factor corresponding to the port may indicate a power difference between the port and a first port, which may alternatively be described as that the power loss factor corresponding to the port indicates a power ratio between the port and the first port. The power difference and the power ratio may be mutually converted, that is, the corresponding power ratio may be determined based on the power difference, or the corresponding power difference may be determined based on the power ratio.

The power difference and the power ratio may be linear values, or may be dB values. For example, the power loss factor corresponding to the port may indicate that a power ratio between a port whose port index is k and a port whose port index is n is $\frac{{P}_{k}}{{P}_{n}}$ or $10 {log}_{10} \frac{{P}_{k}}{{P}_{n}}$. The power loss factor corresponding to the port may indicate that a power difference between a port whose port index is k and a port whose port index is n is *Pₖ - Pₙ* or 10log₁₀ *Pₖ* - 10log₁₀ *Pₙ.* In addition, the power loss factor may alternatively be represented by an amplitude loss factor, and the amplitude loss factor *γ_{A}* and the power loss factor *γ_{P}* satisfy a relationship: ${γ}_{P} = {γ}_{A}^{2}$. log₁₀ represents a logarithm operation with 10 as the base.

Optionally, the first port may be predefined in a protocol, or may be determined by the network device, or may be determined by the terminal device. For detailed content, refer to detailed descriptions of the first port in the following step 402. Details are not described herein.

In a possible design, the terminal device may send a power headroom report (power headroom report, PHR) to the network device, and the network device determines, based on the power headroom report, whether to send the first indication information to the terminal device.

The power headroom report may indicate power headroom or a power headroom range.

A power headroom report procedure is used to report, to the network device, information about a power difference between maximum transmit power of the terminal device and power of uplink data transmission or uplink SRS signal transmission of each active serving cell, and is also referred to as power headroom information (for example, the foregoing power headroom or power headroom range). The network device may determine, based on the power headroom report reported by the terminal device, whether to send the first indication information to the terminal device. The network device may further perform closed-loop power control based on information such as the power headroom report reported by the terminal device and a measured signal-to-noise ratio or a signal-to-interference-plus-noise ratio, to perform proper and effective resource scheduling for the terminal device.

Based on an NR protocol, the power headroom report may be classified into three types: Type 1 PHR, Type 2 PHR, and Type 3 PHR. Type 3 PHR corresponds to power headroom reporting for SRS signal transmission. In this embodiment of this application, the terminal device may report a power headroom report whose type is Type 3 PHR to the network device, and the network device determines, based on the power headroom report, whether to send the first indication information to the terminal device.

The terminal device may determine expected transmit power of an SRS signal based on an actual channel propagation environment (for example, a path loss). If the expected transmit power of the SRS signal is greater than the maximum transmit power of the terminal device, the maximum transmit power of the terminal device is determined as transmit power of the SRS signal. If the expected transmit power of the SRS signal is less than or equal to the maximum transmit power of the terminal device, the expected transmit power of the SRS signal is determined as transmit power of the SRS signal. In other words, the transmit power of the SRS signal needs to be less than or equal to the maximum transmit power of the terminal device.

The terminal device may further determine a difference between the maximum transmit power of the terminal device and the expected transmit power of the SRS signal as the power headroom of the SRS signal. If the expected transmit power of the SRS signal is less than or equal to the maximum transmit power of the terminal device, and the power headroom is a value greater than or equal to 0, it indicates that full-power transmission is not reached. If the expected transmit power of the SRS signal is greater than the maximum transmit power of the terminal device, and the power headroom is a value less than 0, it indicates that full-power transmission is reached.

For example, the terminal device may determine, according to the following formula (1), the smaller value in maximum transmit power *P_{CMAX,f,c}*(*i*) of the terminal device and expected transmit power {*P_{O_{S}RS,b,f,c}*(*qₛ*) *+* 10log₁₀(2*^{µ}* · *M*_{*SRS,b,f,c*(i)}) *+ α_{SRS,b,f,c}*(*qₛ*) · *PL_{b,f,c}*(*q_{d}*) *+ h_{b,f,c}*(*i, l*)} of an SRS signal as transmit power *P_{SRS,b,f,c}*(*i, qₛ, l*) of the SRS signal. The terminal device may further determine, according to the following formula (2), a difference between the maximum transmit power of the terminal device and the expected transmit power of the SRS signal as power headroom *PH*_{type3,*b*,*f*,*c*}(*i*, *qₛ*, *l*) of the SRS signal: $\begin{matrix}{P}_{SRS , b , f , c} \left(i, {q}_{s}, l\right) = \\ min \left\{\begin{matrix}{P}_{CMAX , f , c} \left(i\right) \\ {P}_{O _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\} \left[dBm\right] ;\end{matrix}$ and 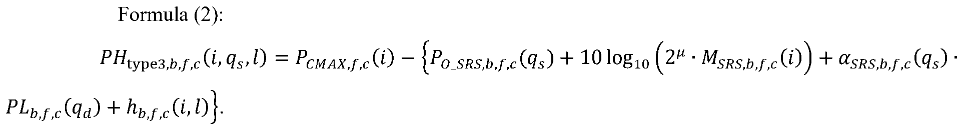 PHtype3,b,f,c(i, qs, l) = PCMAX,f,c(i) - {PO_SRS,b,f,c(qs) + 10log10(2µ · MSRS,b,f,c(i)) + αSRS,b,f,c(qs) · PLb,f,c(qd) + hb,f,c(i, l)}.

*P_{SRS,b,f,c}(i, qₛ, l*) represents transmit power of the SRS signal sent by the terminal device in a cell whose identity is *c,* on a carrier frequency *f,* and in a bandwidth part (bandwidth part, BWP) whose identifier is *b,* where *i* represents a sending occasion of the SRS signal, *qₛ* represents an index of an SRS resource set to which the SRS signal belongs, and *l* represents an SRS power control adjustment state. *min* represents the smaller value. *P_{CMAX,f,c}*(*i*) represents maximum output power (that is, the maximum transmit power of the terminal device) of the terminal device in the serving cell *c,* on the carrier *f*, and on the SRS signal sending occasion *i.* The maximum output power is related to a sending capability of the terminal device and a carrier/cell corresponding to the terminal device. *P_{O_SRS,b,f,c}*(*qₛ*) represents a target receive power value of the SRS signal in the serving cell *c,* on the carrier *f,* and in the BWP *b. M_{SRS,b,f ,c}*(*i*) represents a quantity of resource blocks (resource blocks, RBs) occupied by the SRS signal in the serving cell *c,* on the carrier *f,* in the BWP *b,* and on the SRS signal sending occasion *i. α_{SRS,b,f,c}*(*qₛ*) represents a path loss compensation factor in the serving cell *c,* on the carrier *f,* and in the BWP *b,* and may be configured by the network device by using radio resource control (radio resource control, RRC) signaling.

*µ* represents a value corresponding to a subcarrier spacing (subcarrier size, SCS) configuration. For example, a correspondence between a subcarrier spacing and *µ* may be shown in the following Table 1:

**Table 1**

| *µ* | Subcarrier spacing Δ*f =* 2*^{µ}* · 15 (kHz) |
|---|---|
| 0 | 15 |
| 1 | 30 |
| 2 | 60 |
| 3 | 120 |
| 4 | 240 |

*PL_{b,f,c}*(*q_{d}*) represents a downlink path loss estimation value obtained by the terminal device through calculation based on an index value *q_{d}* of a downlink reference signal, and the downlink path loss estimation value is used as a path loss compensation value for uplink power control. The parameter may be referred to as a path loss parameter. The downlink reference signal that can be associated for measurement may be a (synchronization signal/PBCH block, SSB) signal or a channel state information reference signal (channel state information reference signal, CSI-RS). A value of each downlink reference signal ID is mapped to an SSB resource index, and each SSB resource index is configured by using a parameter ssb-Index; or a value of each downlink reference signal ID is mapped to a CSI-RS resource index, and each CSI-RS resource index is configured by using a parameter csi-RS-Index. In a group of downlink reference signal resource indexes, the terminal device may determine a specific downlink reference signal ID by using the SSB resource index or the CSI-RS resource index. For example, a calculation formula of *PL_{b,f,c}*(*q_{d}*) may satisfy the following formula: *PL_{b,f,c}*(*q_{d}*) = reference Signal Power - higher layer filtered RSRP. reference Signal Power represents transmit power of the downlink reference signal configured by using higher layer signaling, and higher layer filtered RSRP represents reference signal received power that is received by the terminal device and that is obtained through higher layer filtering.

*h_{b,f,c}*(*i, l*) represents a closed-loop control parameter, and is a dynamic power adjustment amount indicated by the network device by using downlink control information (downlink control information, DCI). Power control of the SRS signal may comply with a closed-loop power control indication of a physical uplink shared channel (physical uplink shared channel, PUSCH), or may be determined by using the closed-loop power control indication separately.

Based on the foregoing descriptions, when reporting the power headroom report to the network device, the terminal device may report the power headroom or the power headroom range. The power headroom range may include a power headroom maximum value and a power headroom minimum value. Any power headroom greater than or equal to the power headroom minimum value and less than or equal to the power headroom maximum value may be considered as being in the power headroom range.

Alternatively, different power headroom quantization levels may be defined for the power headroom report through quantization, and each power headroom quantization level may correspond to one piece of power headroom or one power headroom range. When reporting the power headroom report to the network device, the terminal device may indicate the power headroom quantization level by using the indication information. The network device determines the power headroom quantization level based on the indication information, and then determines, based on a correspondence between the power headroom quantization level and the power headroom or the power headroom range, the power headroom or the power headroom range indicated by the terminal device, so that the power headroom or the power headroom range can be indicated by using a small quantity of bits, to reduce signaling overheads.

For example, as shown in the following Table 2, 64 power headroom quantization levels are defined, and may be indicated by using 6-bit indication information. For example, each power headroom quantization level corresponds to one power headroom range, and power headroom ranges corresponding to the 64 power headroom quantization levels may be shown in the following Table 3:

**Table 2 Power headroom quantization level**

| PHR (6 bits) | Power headroom quantization level (Power Headroom Level) |
|---|---|
| 0 | POWER_HEADROOM_0 |
| 1 | POWER_HEADROOM_1 |
| 2 | POWER_HEADROOM_2 |
| 3 | POWER_HEADROOM_3 |
| ... | ... |
| 60 | POWER_HEADROOM_60 |
| 61 | POWER_HEADROOM_61 |
| 62 | POWER_HEADROOM_62 |
| 63 | POWER_HEADROOM_63 |

**Table 3 Correspondence between a power headroom quantization level and a power headroom range**

| Power headroom quantization level | Power headroom range (dB) |
|---|---|
| POWER_HEADROOM_0 | PH < -32 |
| POWER_HEADROOM_1 | -32 ≤ PH < -31 |
| POWER_HEADROOM_2 | -31 ≤ PH < -30 |
| POWER_HEADROOM_3 | -30 ≤ PH < -29 |
| ... | ... |
| POWER_HEADROOM_53 | 20 ≤ PH < 21 |
| POWER_HEADROOM_54 | 21 ≤ PH < 22 |
| POWER_HEADROOM_55 | 22 ≤ PH < 24 |
| POWER_HEADROOM_56 | 24 ≤ PH < 26 |
| POWER_HEADROOM_57 | 26 ≤ PH < 28 |
| POWER_HEADROOM_58 | 28 ≤ PH < 30 |
| POWER_HEADROOM_59 | 30 ≤ PH < 32 |
| POWER_HEADROOM_60 | 32 ≤ PH < 34 |
| POWER_HEADROOM_61 | 34 ≤ PH < 36 |
| POWER_HEADROOM_62 | 36 ≤ PH < 38 |
| POWER_HEADROOM_63 | PH ≥ 38 |

Based on the foregoing descriptions of the power headroom report, when determining that the power headroom or the power headroom range meets a first condition, the network device may send the first indication information to the terminal device, which implements dynamic sending of the first indication information, to dynamically report the power loss factor corresponding to the port configured for the terminal device.

For example, that the power headroom or the power headroom range meets the first condition may include any one of the following: The power headroom is less than a first threshold; a minimum value of the power headroom range is less than a second threshold; or a maximum value of the power headroom range is less than a third threshold.

The first threshold, the second threshold, or the third threshold may be predefined (for example, predefined based on insertion losses between antennas of the terminal device, which is alternatively described as being predefined based on a maximum value of the power loss factor corresponding to the port configured for the terminal device); the first threshold, the second threshold, or the third threshold may alternatively be determined by the network device based on a maximum value of the power loss factor corresponding to the port configured for the terminal device (the maximum value may be determined based on insertion losses between antennas of the terminal device); or the first threshold, the second threshold, or the third threshold may alternatively be determined by the network device based on a power loss factor interval that a maximum value of the power loss factor corresponding to the port configured for the terminal device is in. This is not limited.

The terminal device may actively report third indication information to the network device, to indicate the maximum value of the power loss factor corresponding to the port configured for the terminal device or the power loss factor interval that the maximum value is in. Alternatively, the network device may send sixth indication information to the terminal device, to indicate the terminal device to report the maximum value of the power loss factor corresponding to the port, and the terminal device reports third indication information to the network device in response to the sixth indication information, to indicate the maximum value of the power loss factor corresponding to the port configured for the terminal device or the power loss factor interval that the maximum value is in. In this way, the network device may determine the first threshold, the second threshold, or the third threshold based on the third indication information.

The power loss factor interval may include a maximum value of the power loss factor and a minimum value of the power loss factor, and any power loss factor greater than or equal to the minimum value of the power loss factor and less than or equal to the maximum value of the power loss factor may be considered as being in the power loss factor interval.

Optionally, the terminal device may report, to the network device by using the third indication information, the maximum value of the power loss factor corresponding to the port. Alternatively, refer to the foregoing quantization manner of the power headroom report. Different power loss factor quantization levels may alternatively be defined for the power loss factor through quantization, and each power loss factor quantization level may correspond to one power loss factor or one power loss factor interval. The terminal device may report, to the network device by using the third indication information, a power loss factor quantization level corresponding to the maximum value of the power loss factor corresponding to the port. The network device determines the power loss factor quantization level based on the third indication information, and then determines, based on a correspondence between the power loss factor quantization level and the power loss factor or the power loss factor interval, the maximum value of the power loss factor corresponding to the port indicated by the terminal device or the power loss factor interval that the maximum value is in. If the network device determines, based on the third indication information, the maximum value of the power loss factor corresponding to the port configured for the terminal device, the first threshold, the second threshold, or the third threshold may be determined based on the maximum value. If the network device determines, based on the third indication information, the power loss factor interval that the maximum value of the power loss factor corresponding to the port configured for the terminal device is in, the network device may determine the first threshold, the second threshold, or the third threshold based on any value in the power loss factor interval (for example, the maximum value or the minimum value in the power loss factor interval).

Optionally, the first threshold, the second threshold, and the third threshold may be the same (for example, are all the maximum value of the power loss factor corresponding to the port configured for the terminal device, or are all the maximum value or the minimum value in the power loss factor interval that the power loss factor corresponding to the port configured for the terminal device is in), or may be different. This is not limited.

Optionally, the first indication information may be downlink control information (downlink control information, DCI) signaling, media access control control element (media access control control element, MAC-CE) signaling, or the like. This is not limited.

In a possible design, when the network device determines that the power headroom or the power headroom range reported by the terminal device meets the first condition, it indicates that the expected transmit power of the SRS signal does not have sufficient transmit power headroom compared with a maximum transmit power limitation of the terminal device, and the terminal device cannot perform complete power pre-compensation on power losses between antennas (for example, the terminal device cannot perform power pre-compensation on the power losses between antennas at all, or the terminal device can perform pre-compensation only on a part of the power loss based on maximum transmit power and cannot perform complete pre-compensation). In this case, the network device may send the first indication information to the terminal device, to indicate the terminal device to report the power loss factor corresponding to the port, and the network device performs, based on the power loss factor corresponding to the port, power compensation on the channel estimation result determined based on the SRS signal, to reduce a channel estimation error caused by the power losses between antennas, improve accuracy of the channel estimation result, and improve communication performance.

In another possible design, when the network device determines that the power headroom or the power headroom range reported by the terminal device does not meet the first condition, it indicates that the expected transmit power of the SRS signal has sufficient transmit power headroom compared with a maximum transmit power limitation of the terminal device, and the terminal device has a capability of performing complete power pre-compensation on the power losses between antennas when sending the SRS signals. In this case, the network device may not need to send the first indication information to the terminal device, and the terminal device does not need to report the power loss factor corresponding to the port to the network device. Compared with power compensation performed on a network device side, power pre-compensation performed on a terminal device side can obtain better performance.

For example, the network device sends the first indication information to the terminal device when determining that the minimum value of the power headroom range is less than the second threshold. Considering that the insertion losses between antennas of the terminal device usually do not exceed a specific value (for example, 6 dB), or the maximum value of the power loss factor corresponding to the port that is sent by the terminal device and that is received by the network device is the specific value, the network device may determine the second threshold as the specific value.

For example, the second threshold determined by the network device is 6 dB. The terminal device may report Type 3 PHR to the network device. As shown in FIG. 5, if the power headroom report reported by the terminal device corresponds to POWER_HEADROOM _53 in Table 3, the network device may determine that the power headroom range reported by the terminal device is 20 ≤ PH < 21, indicating a range of remaining transmit power headroom relative to the maximum transmit power limitation is 20 dB to 21 dB. Because the minimum value 20 dB of the reported power headroom range is greater than 0, which does not reach the full power, there is still power headroom, and the minimum value 20 dB is greater than the second threshold 6 dB, the terminal device has the capability of performing complete power pre-compensation on the power losses between antennas when sending the SRS signals. In this case, the network device may not need to send the first indication information to the terminal device, and the terminal device may perform power pre-compensation (for example, perform complete power pre-compensation to the fullest extent) when sending the SRS signal, to obtain better performance.

As shown in FIG. 6, if the power headroom report reported by the terminal device corresponds to POWER_HEADROOM_30 in Table 3, the network device may determine that the power headroom range reported by the terminal device is 1 ≤ PH < 2, indicating a range of remaining transmit power headroom relative to the maximum transmit power limitation is 1 dB to 2 dB. Because the minimum value 1 dB of the reported power headroom is greater than 0, which does not reach the full power, there is still power headroom, but the minimum value 1 dB is less than the second threshold 6 dB, the power headroom is insufficient to support the terminal device in performing complete power pre-compensation on the power losses between antennas. In this case, the network device may send the first indication information to the terminal device, to indicate the terminal device to report the power loss factor corresponding to the port, and the network device performs, based on the power loss factor corresponding to the port, power compensation on the channel estimation result determined based on the SRS signal, to reduce the channel estimation error caused by the power losses between antennas, improve the accuracy of the channel estimation result, and improve the communication performance.

In the foregoing descriptions that the power headroom or the power headroom range meets the first condition, the power headroom or the power headroom range is determined based on a difference between the maximum transmit power of the terminal device and the expected transmit power of the SRS signal (the difference = the maximum transmit power of the terminal device - the expected transmit power of the SRS signal). Optionally, the power headroom or the power headroom range may alternatively be determined based on a difference between the expected transmit power of the SRS signal and the maximum transmit power of the terminal device (the difference = the expected transmit power of the SRS signal - the maximum transmit power of the terminal device). In this case, that the power headroom or the power headroom range meets the first condition may include any one of the following: The power headroom is less than a fourth threshold; or the maximum value of the power headroom range is less than a fifth threshold; or the minimum value of the power headroom range is less than a sixth threshold.

The fourth threshold, the fifth threshold, or the sixth threshold may be predefined (for example, predefined based on the insertion losses between antennas of the terminal device, which is alternatively described as being predefined based on the maximum value of the power loss factor corresponding to the port configured for the terminal device); the fourth threshold, the fifth threshold, or the sixth threshold may alternatively be determined by the network device based on the maximum value of the power loss factor corresponding to the port configured for the terminal device (the maximum value may be determined based on the insertion losses between antennas of the terminal device); or the fourth threshold, the fifth threshold, or the sixth threshold may alternatively be determined by the network device based on the power loss factor interval that the maximum value of the power loss factor corresponding to the port configured for the terminal device is in. This is not limited.

Optionally, the fourth threshold, the fifth threshold, and the sixth threshold may be the same (for example, are all the maximum value of the power loss factor corresponding to the port configured for the terminal device, or are all the maximum value or the minimum value in the power loss factor interval that the power loss factor corresponding to the port configured for the terminal device is in), or may be different. This is not limited.

Optionally, the fourth threshold may be an opposite number of the first threshold, the fifth threshold may be an opposite number of the second threshold, and the sixth threshold may be an opposite number of the third threshold.

For two numbers whose values are opposite (that is, numbers are the same, and symbols of the numbers are opposite), one of the two numbers may be described as an opposite number of the other number. For example, if the second threshold is 6 dB, the fifth threshold may be -6 dB.

Optionally, different from that the network device sends the first indication information to the terminal device when the power headroom or the power headroom range reported by the terminal device meets the first condition, the network device may alternatively send the first indication information to the terminal device when the power headroom or the power headroom range does not meet the first condition. In other words, regardless of whether the power headroom or the power headroom range reported by the terminal device meets the first condition, the network device may send the first indication information to the terminal device, to indicate the terminal device to report the power loss factor corresponding to the port.

In comparison with the solution "regardless of whether the power headroom or the power headroom range reported by the terminal device meets the first condition, the network device may send the first indication information to the terminal device", in the solution "the network device sends the first indication information to the terminal device when the power headroom or the power headroom range reported by the terminal device meets the first condition", the network device may determine, based on the power headroom or the power headroom range reported by the terminal device, whether the terminal device has a capability of performing complete power pre-compensation on the power losses between antennas. If the terminal device has the capability of performing complete power pre-compensation, the network device may not need to send the first indication information to the terminal device, to reduce signaling overheads, avoid that the terminal device continuously reports the power loss factor corresponding to the port, and reduce reporting overheads. In addition, power compensation on the power losses between antennas may be performed on the terminal device side as much as possible, and the terminal device performs complete power pre-compensation, to reduce the channel estimation error caused by the power losses between antennas, improve accuracy of the channel estimation result, avoid impact on the accuracy of the channel estimation result caused by a case in which power compensation on the network device side amplifies interference and noise, and improve the communication performance.

If the terminal device does not have the capability of performing complete power pre-compensation, the network device may send the first indication information to the terminal device, to indicate the terminal device to report the power loss factor corresponding to the port, and the network device performs, based on the power loss factor corresponding to the port, power compensation on the channel estimation result determined based on the SRS signal. Although the network device amplifies interference and noise when performing power compensation, which affects the accuracy of the channel estimation result to some extent, because the terminal device does not have the capability of performing complete power pre-compensation, impact on the accuracy of the channel estimation result caused by the power losses between antennas is greater if the network device does not perform power compensation. Therefore, the network device may perform power compensation, to reduce, to the fullest extent, the channel estimation error caused by the power losses between antennas, improve the accuracy of the channel estimation result, and improve the communication performance.

Optionally, the terminal device may further send capability information to the network device, where the capability information may indicate whether the terminal device supports reporting of the power loss factor corresponding to the port configured for the terminal device.

If the capability information of the terminal device indicates that the terminal device supports reporting of the power loss factor corresponding to the port, the network device may send the first indication information to the terminal device. If the capability information of the terminal device indicates that the terminal device does not support reporting of the power loss factor corresponding to the port, the network device does not need to send the first indication information to the terminal device.

Optionally, the capability information of the terminal device may further include the third indication information. The third indication information may indicate the maximum value of the power loss factor corresponding to the port configured for the terminal device, or the third indication information may indicate the power loss factor interval that the maximum value of the power loss factor corresponding to the port configured for the terminal device is in.

For descriptions of the third indication information, refer to the foregoing descriptions of the third indication information. Details are not described again.

Optionally, the third indication information may be an insertion loss power reporting (IL power reporting) parameter in a UE capability parameter.

For example, the maximum value of the power loss factor corresponding to the port configured for the terminal device may be any one of the following: 3 dB, 4 dB, 6 dB, 0 dB, or the like. This is not limited.

In a possible design, the capability information may carry seventh indication information, to indicate whether the terminal device supports reporting of the power loss factor corresponding to the port.

For example, the seventh indication information is 1 bit. A value of the 1 bit may be set to 0, to indicate that the terminal device does not support reporting of the power loss factor corresponding to the port. A value of the 1 bit is set to 1, to indicate that the terminal device supports reporting of the power loss factor corresponding to the port. Alternatively, a value of the 1 bit may be set to 1, to indicate that the terminal device does not support reporting of the power loss factor corresponding to the port. A value of the 1 bit may be set to 0, to indicate that the terminal device supports reporting of the power loss factor corresponding to the port. This is not limited.

In the possible design, the capability information may further carry the third indication information, to indicate the maximum value of the power loss factor corresponding to the port configured for the terminal device, or indicate the power loss factor interval that the maximum value of the power loss factor corresponding to the port configured for the terminal device is in.

In another possible design, the third indication information in the capability information may further indicate (for example, implicitly indicate) whether the terminal device supports reporting of the power loss factor corresponding to the port in addition to indicating the maximum value of the power loss factor corresponding to the port configured for the terminal device or the power loss factor interval that the maximum value is in, without adding additional indication information (for example, the seventh indication information) to indicate whether the terminal device supports reporting of the power loss factor corresponding to the port, to reduce signaling overheads.

Whether the terminal device supports reporting the power loss factor corresponding to the port may be determined based on the maximum value of the power loss factor corresponding to the port indicated by the third indication information or the power loss factor interval that the maximum value is in.

For example, if the maximum value of the power loss factor corresponding to the port indicated by the third indication information is a specific value (for example, 0 dB), it may indicate that the terminal device does not support reporting of the power loss factor corresponding to the port. If the maximum value of the power loss factor corresponding to the port indicated by the third indication information is not the specific value (for example, 0 dB), it may indicate that the terminal device supports reporting of the power loss factor corresponding to the port.

In another example, if the power loss factor interval that the maximum value of the power loss factor corresponding to the port indicated by the third indication information is in is a specific interval, it may indicate that the terminal device does not support reporting of the power loss factor corresponding to the port. If the power loss factor interval that the maximum value of the power loss factor corresponding to the port indicated by the third indication information is in is not the specific interval, it may indicate that the terminal device supports reporting of the power loss factor corresponding to the port.

Based on the foregoing descriptions of the capability information, the terminal device may notify, by reporting the capability information to the network device, the network device whether the terminal device can support reporting of the power loss factor, so that the network device can trigger the terminal device to flexibly report a power loss factor corresponding to a port on which compensation needs to be further performed. In addition, the terminal device may further indicate, by using the capability information, the maximum value of the power loss factor corresponding to the port of the terminal device, so that the network device determines, based on the maximum value and the power headroom report reported by the terminal device, whether the terminal device has the capability of performing complete power pre-compensation, to trigger the terminal device to report the power loss factor on a proper occasion, and avoid large reporting overheads caused by continuous reporting of the terminal device.

Step 402: The terminal device sends second indication information to the network device; and correspondingly, the network device receives the second indication information from the terminal device.

The second indication information may indicate the power loss factor corresponding to the port configured for the terminal device. The power loss factor corresponding to the port may indicate a power difference between the port and a first port, which is alternatively described as that the power loss factor corresponding to the port indicates a power ratio between the port and the first port.

The network device may configure an SRS resource for the terminal device. Each SRS resource may include ${N}_{ap}^{SRS} ∈ \left\{1, 2, 4, 8\right\}$ ports, and each port may correspond to a physical antenna or a virtual antenna of the terminal device. The terminal device may determine, based on the SRS resource configured by the network device, the port configured for the terminal device.

In a first possible design, the first port may be a reference port, and the reference port may be a port whose port index is a specific port index. For example, the reference port may be a port whose port index is k, and the port whose port index is k may also be referred to as a port k.

The reference port may be any one of ports configured for the terminal device. The reference port may be predefined in a protocol, or may be determined by the network device, or may be determined by the terminal device. This is not limited. For example, a port corresponding to a main antenna of the terminal device may be determined as the reference port.

For example, the ports configured for the terminal device include a port 0, a port 1, a port 2, and a port 3. The port 0 may be used as the reference port. In this case, a power loss factor corresponding to the port 1 may be a power difference or a power ratio between the port 1 and the port 0, a power loss factor corresponding to the port 2 may be a power difference or a power ratio between the port 2 and the port 0, and a power loss factor corresponding to the port 3 may be a power difference or a power ratio between the port 3 and the port 0.

In the possible design, because the power loss factor corresponding to the port indicates the power difference or the power ratio between the port and the first port, when a specific port of the terminal device is determined as the reference port, the power loss factor corresponding to the port may be 0 dB (that is, the power difference) or 1 (that is, the power ratio). When sending the second indication information to the network device, the terminal device may indicate a power loss factor corresponding to a port other than the reference port, or the terminal device may indicate power loss factors corresponding to all ports of the terminal device.

For example, the network device configures an nTmR antenna selection (antenna switching) SRS for the terminal device, including m/n SRS resources, and each SRS resource includes n ports. The terminal device may send the second indication information (for example, an SRS power difference (SRSPowerDifference) signaling field) to the network device, to indicate the power loss factor corresponding to the port configured for the terminal device. For example, the reference port is a port 0. The second indication information may indicate power loss factors corresponding to m-1 ports, the m-1 ports do not include the port 0, and a k^{th} power loss factor in the power loss factors corresponding to the m-1 ports may represent a power loss factor corresponding to a (k+1)^{th} port relative to the reference port in the configured SRS resources.

For example, the network device configures a 1T4R antenna selection SRS for the terminal device, and the SRS separately corresponds to a port 0, a port 1, a port 2, and a port 3. Assuming that the port 0 is determined as the reference port, the terminal device may indicate, to the network device by using the second indication information, a power loss factor (for example, 3 dB) corresponding to the port 1, a power loss factor (for example, 4 dB) corresponding to the port 2, and a power loss factor (for example, 4 dB) corresponding to the port 3. Alternatively, the terminal device may indicate, to the network device by using the second indication information, a power loss factor (for example, 0 dB) corresponding to the port 0, the power loss factor (for example, 3 dB) corresponding to the port 1, the power loss factor (for example, 4 dB) corresponding to the port 2, and the power loss factor (for example, 4 dB) corresponding to the port 3.

Compared with that the terminal device reports, to the network device, the power loss factors corresponding to all the ports, that the terminal device reports the power loss factors corresponding to the ports other than the reference port can reduce a reported and indicated information amount, and reduce signaling overheads.

In a second possible design, the first port may alternatively be a neighboring port of the port.

Adjacent ports of different ports may be the same or may be different. This is not limited.

The neighboring port of the port may be determined based on a port index of the port. For example, the port index of the port is k. The neighboring port of the port may be a port whose port index is k-1 or k+1, and the port whose port index is k-1 or k+1 may also be referred to as a port k-1 or a port k+1.

Optionally, when at least two ports correspond to different first ports, the network device may determine, based on power loss factors that correspond to the ports and that are reported by the terminal device, power loss factors of the ports relative to a same first port, to facilitate subsequent power compensation.

For example, ports configured for the terminal device include a port 1, a port 2, a port 3, and a port 4. The neighboring port 1 of the port 2 may be used as a first port of the port 2, and a power loss factor corresponding to the port 2 may indicate a power difference or a power ratio between the port 2 and the port 1. The neighboring port 2 of the port 3 may be used as a first port of the port 3, and a power loss factor corresponding to the port 3 may indicate a power difference or a power ratio between the port 3 and the port 2. The neighboring port 3 of the port 4 may be used as a first port of the port 4, and a power loss factor corresponding to the port 4 may indicate a power difference or a power ratio between the port 4 and the port 3.

In the possible design, when sending the second indication information to the network device, the terminal device may indicate power loss factors corresponding to all ports. Alternatively, a power loss factor corresponding to a part of ports may be indicated, and a power loss factor corresponding to at least one first port does not need to be indicated, to reduce a reported and indicated information amount, and reduce signaling overheads.

For example, ports configured for the terminal device include a port 1, a port 2, a port 3, and a port 4, and the port 1 is a first port of the port 2, the port 2 is a first port of the port 3, and the port 3 is a first port of the port 4. The terminal device may report, to the network device by using the second indication information, a power loss factor corresponding to the port 2, a power loss factor corresponding to the port 3, and a power loss factor corresponding to the port 4, and does not need to report a power loss factor corresponding to the port 1. After receiving the second indication information, the network device may determine that the power loss factor corresponding to the port 1 is 0 dB (that is, a power difference) or 1 (that is, a power ratio); determine a power difference or a power ratio between the port 2 and the port 1 based on the power loss factor corresponding to the port 2; determine a power difference or a power ratio between the port 3 and the port 1 (that is, the power loss factor of the port 3 relative to the port 1) based on the power loss factor corresponding to the port 2 and the power loss factor corresponding to the port 3; and determine a power difference or a power ratio between the port 4 and the port 1 (that is, the power loss factor of the port 4 relative to the port 1) based on the power loss factor corresponding to the port 2, the power loss factor corresponding to the port 3, and the power loss factor corresponding to the port 4, to facilitate subsequent power compensation.

According to the foregoing two possible designs, the first port may be predefined in a protocol, or may be determined by the network device, or may be determined by the terminal device. This is not limited.

Optionally, if the first port is determined by the network device, the network device may send, to the terminal device, fourth indication information that indicates the first port, and the terminal device may determine the first port based on the fourth indication information, to determine the power loss factor corresponding to the port configured for the terminal device.

Optionally, if the first port is determined by the terminal device, the terminal device may determine, based on the first port, the power loss factor corresponding to the port configured for the terminal device. The terminal device may further send, to the network device, fifth indication information that indicates the first port, and the network device may determine the first port based on the fifth indication information, to determine a first port corresponding to each received power loss factor.

In a possible implementation, when determining the power loss factor corresponding to the port, the terminal device may directly report, to the network device without performing power pre-compensation on the port, the power loss factor determined based on an insertion loss.

In another possible implementation, when determining the power loss factor corresponding to the port, the terminal device may also flexibly perform complete power pre-compensation or partial power pre-compensation on each port based on actual power headroom and a transmit power requirement, and determine, based on transmit power obtained through power pre-compensation, the power loss factor corresponding to the port, to reduce, to the fullest extent, the channel estimation error caused by the power losses between antennas, improve the accuracy of the channel estimation result, and improve the communication performance.

The terminal device may perform power pre-compensation on an uplink reference signal corresponding to one or more ports of the terminal device, to determine transmit power corresponding to each port, determine, based on the transmit power corresponding to each port and transmit power corresponding to the first port, a power loss factor corresponding to each port, and send the second indication information to the network device based on a power loss factor corresponding to each port.

Optionally, the terminal device may send the second indication information to the network device through a physical uplink control channel (physical uplink control channel, PUCCH) or an uplink data channel (for example, a PUSCH).

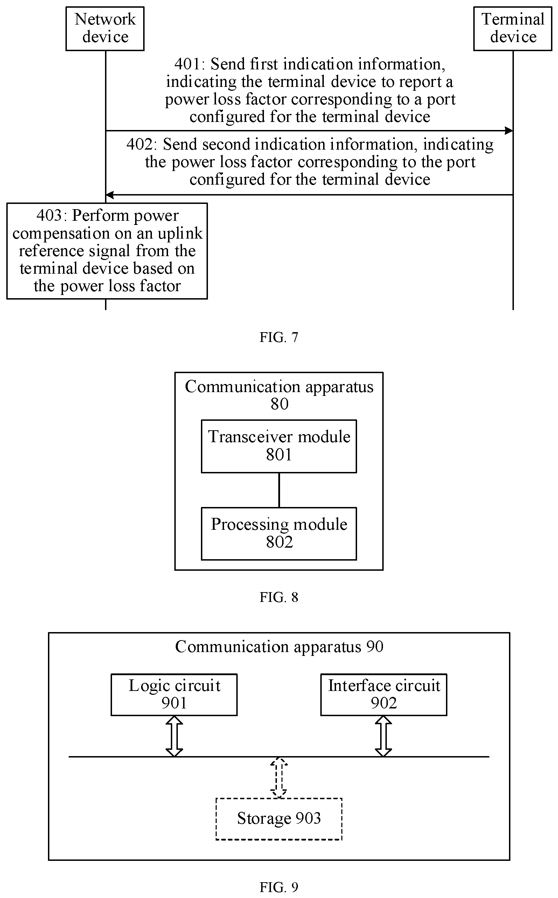

Optionally, as shown in FIG. 7, the method further includes step 403: The network device performs power compensation on the uplink reference signal from the terminal device based on the power loss factor.

The network device may perform, based on the power loss factor corresponding to each port, power compensation on an uplink reference signal corresponding to each port.

For example, the network device may perform, based on the power loss factor reported by the terminal device, power compensation on a channel matrix obtained by performing channel measurement based on the uplink reference signal (for example, the SRS signal).

For example, the network device configures four ports for the terminal device. The terminal device may send SRS signals through the four ports, and signals received by the network device may be the following *y*. It is assumed that the network device determines, based on the second indication information reported by the terminal device, that power loss factors corresponding to the four ports are respectively *a*₁, *a*₂, *a*₃, and *a*₄. The network device may perform, based on the power loss factor, power compensation on a channel coefficient corresponding to each port, to obtain signals *z* obtained through power compensation. It can be learned that power losses between different antennas are equivalently equalized after power compensation is performed, to effectively reduce the channel estimation error caused by the power losses between antennas. $y = H \left(\begin{matrix}{α}_{1} {s}_{1} \\ {a}_{2} {s}_{2} \\ {a}_{3} {s}_{3} \\ {a}_{4} {s}_{4}\end{matrix}\right) + n ;$ and $z = \left(\begin{matrix}\begin{matrix}1 / {a}_{1} & 0 \\ 0 & 1 / {a}_{2}\end{matrix} & \begin{matrix}0 & 0 \\ 0 & 0\end{matrix} \\ \begin{matrix}0 & 0 \\ 0 & 0\end{matrix} & \begin{matrix}1 / {a}_{3} & 0 \\ 0 & 1 / {a}_{4}\end{matrix}\end{matrix}\right) y = \left(\begin{matrix}\begin{matrix}1 / {a}_{1} & 0 \\ 0 & 1 / {a}_{2}\end{matrix} & \begin{matrix}0 & 0 \\ 0 & 0\end{matrix} \\ \begin{matrix}0 & 0 \\ 0 & 0\end{matrix} & \begin{matrix}1 / {a}_{3} & 0 \\ 0 & 1 / a 4\end{matrix}\end{matrix}\right) H \left(\begin{matrix}{α}_{1} {s}_{1} \\ {α}_{2} {s}_{2} \\ {α}_{3} {s}_{3} \\ {α}_{4} {s}_{4}\end{matrix}\right) + n ′ = H \left(\begin{matrix}{s}_{1} \\ {s}_{2} \\ {s}_{3} \\ {s}_{4}\end{matrix}\right) + n ′ .$

*H* represents a channel matrix corresponding to the four ports, *s*₁, *s*₂, *s*₃, and *s*₄ respectively represent the SRS signals correspondingly sent through the four ports, *n* represents a corresponding noise vector, $\left(\begin{matrix}\begin{matrix}1 / {a}_{1} & 0 \\ 0 & 1 / {a}_{2}\end{matrix} & \begin{matrix}0 & 0 \\ 0 & 0\end{matrix} \\ \begin{matrix}0 & 0 \\ 0 & 0\end{matrix} & \begin{matrix}1 / {a}_{3} & 0 \\ 0 & 1 / a 4\end{matrix}\end{matrix}\right)$ represents a power compensation matrix, and *n'* is a result of multiplying the power compensation matrix by *n.*

According to the method shown in FIG. 4 to FIG. 7, the terminal device may send, to the network device, the power loss factor corresponding to the port configured for the terminal device, so that the network device can obtain the power loss factor reported by the terminal device, and the power loss factor reported by the terminal device can be considered. For example, the network device performs, based on the power loss factor reported by the terminal device, power compensation on the channel estimation result determined based on the uplink reference signal (for example, the SRS signal), to reduce the channel estimation error caused by the power losses between antennas, improve the accuracy of the channel estimation result, and improve the communication performance.

In addition, in embodiments of this application, power compensation is used as an example for description. It may be understood that the power compensation is reflected in a signal, which may alternatively be described as signal amplitude compensation.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined based on an internal logical relationship thereof, to form a new embodiment.

It may be understood that in embodiments of this application, an execution body may perform some or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more than two functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

When each functional module is obtained through division based on each corresponding function, FIG. 8 shows a communication apparatus 80. The communication apparatus 80 may perform actions performed by the terminal device in the method shown in FIG. 4 to FIG. 7, or perform actions performed by the network device in the method shown in FIG. 4 to FIG. 7. All related content of steps in the foregoing method embodiments may be referenced to function descriptions of corresponding functional modules. For technical effects that can be achieved by the apparatus, refer to the foregoing method embodiments. Details are not described herein again.

The communication apparatus 80 may include a transceiver module 801 and a processing module 802. For example, the communication apparatus 80 may be a communication device, or may be a chip used in the communication device, or another combined device or part that has a function of the communication apparatus. When the communication apparatus 80 is the communication device, the transceiver module 801 may be a transceiver, where the transceiver may include an antenna, a radio frequency circuit, and the like; and the processing module 802 may be a processor (or a processing circuit), for example, a baseband processor, where the baseband processor may include one or more CPUs. When the communication apparatus 80 is the part having the function of the communication apparatus, the transceiver module 801 may be a radio frequency unit; and the processing module 802 may be a processor (or a processing circuit), for example, a baseband processor. When the communication apparatus 80 is a chip system, the transceiver module 801 may be an input/output interface of a chip (for example, a baseband chip); and the processing module 802 may be a processor (or a processing circuit) of the chip system, and may include one or more central processing units. It should be understood that the transceiver module 801 in this embodiment of this application may be implemented by the transceiver or a transceiver-related circuit component; and the processing module 802 may be implemented by the processor or a processor-related circuit component (or referred to as the processing circuit).

For example, the transceiver module 801 may be configured to perform all sending and receiving operations performed by the communication apparatus in the embodiments shown in FIG. 4 to FIG. 7, and/or configured to support another process of the technology described in this specification; and the processing module 802 may be configured to perform all operations other than the sending and receiving operations performed by the communication apparatus in the embodiments shown in FIG. 4 to FIG. 7, and/or configured to support another process of the technology described in this specification.

In a first example, the transceiver module 801 may be configured to receive first indication information from the network device, and may be further configured to send second indication information to the network device. The first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

In a possible design, the transceiver module 801 may be further configured to send capability information to the network device, where the capability information indicates that the terminal device supports reporting of the power loss factor corresponding to the port configured for the terminal device.

In a possible design, the capability information includes third indication information, and the third indication information indicates a maximum value of the power loss factor corresponding to the port configured for the terminal device.

In a possible design, the first port is a reference port, or the first port is a neighboring port of the port.

In a possible design, the transceiver module 801 may be further configured to receive fourth indication information from the network device, where the fourth indication information indicates the first port.

In a possible design, the transceiver module 801 may be further configured to send fifth indication information to the network device, where the fifth indication information indicates the first port.

In a possible design, the processing module 802 may be configured to perform power compensation on an uplink reference signal corresponding to one or more ports of the terminal device, to determine transmit power corresponding to each port; and may be further configured to determine, based on the transmit power corresponding to each port and transmit power corresponding to the first port, a power loss factor corresponding to each port. The transceiver module 801 may be specifically configured to send the second indication information to the network device based on the power loss factor corresponding to each port.

In a second example, the transceiver module 801 may be configured to send first indication information to the terminal device, and may be further configured to receive second indication information from the terminal device. The first indication information indicates the terminal device to report a power loss factor corresponding to a port configured for the terminal device, the power loss factor corresponding to the port indicates a power difference between the port and a first port, and the second indication information indicates the power loss factor corresponding to the port configured for the terminal device.

In a possible design, the processing module 802 may be configured to perform power compensation on an uplink reference signal from the terminal device based on the power loss factor.

In a possible design, the transceiver module 801 may be further configured to receive a power headroom report from the terminal device, where the power headroom report indicates power headroom or a power headroom range. When the processing module 802 determines that the power headroom or the power headroom range meets a first condition, the transceiver module 801 sends the first indication information to the terminal device.

In a possible design, that the power headroom or the power headroom range meets the first condition includes: The power headroom is less than a first threshold; a minimum value of the power headroom range is less than a second threshold; or a maximum value of the power headroom range is less than a third threshold.

In a possible design, the first threshold, the second threshold, or the third threshold is predefined; or the first threshold, the second threshold, or the third threshold is determined based on a maximum value of the power loss factor corresponding to the port configured for the terminal device.

In a possible design, the transceiver module 801 may be further configured to receive capability information from the terminal device, where the capability information indicates that the terminal device supports reporting of the power loss factor corresponding to the port configured for the terminal device.

In a possible design, the capability information includes third indication information, and the third indication information indicates the maximum value of the power loss factor corresponding to the port configured for the terminal device.

In a possible design, the first port is a reference port, or the first port is a neighboring port of the port.

In a possible design, the transceiver module 801 may be further configured to send fourth indication information to the terminal device, where the fourth indication information indicates the first port.

In a possible design, the transceiver module 801 may be further configured to receive fifth indication information from the terminal device, where the fifth indication information indicates the first port.

In another possible implementation, the transceiver module 801 in FIG. 8 may be replaced with a transceiver, and a function of the transceiver module 801 may be integrated into the transceiver. The processing module 802 may be replaced with a processor, and a function of the processing module 802 may be integrated into the processor. Further, the communication apparatus 80 shown in FIG. 8 may include a storage.

Alternatively, when the processing module 802 is replaced with the processor, and the transceiver module 801 is replaced with the transceiver, the communication apparatus 80 in this embodiment of this application may be a communication apparatus 90 shown in FIG. 9. The processor may be a logic circuit 901, and the transceiver may be an interface circuit 902. Further, the communication apparatus 90 shown in FIG. 9 may include a storage 903.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

Embodiments of this application further provide a computer-readable storage medium. All or some of procedures in the foregoing method embodiments may be completed by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may alternatively be an external storage device of the foregoing terminal, for example, a plug-in hard disk, a smart storage card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of' means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. "A plurality of" refers to two or more than two. "At least two (items)" means two, three, or more than three. "And/or" is used to describe an association relationship between associated objects, and indicates that three relationships may exist. For example, "A and/or B" may represent three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one (piece) of a, b, or c may represent: a, b, c, "a and b", "a and c", "b and c", or "a, b, and c", where a, b, and c may be singular or plural. Both "when ..." and "if' mean that corresponding processing is performed in an objective case, are not intended to limit time, do not require a determining action during implementation, and do not mean that there is another limitation.

In addition, in embodiments of this application, the word "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In this application, "sending information to ... (a terminal device)" may be understood as that a destination end of the information is the terminal device, and may include directly or indirectly sending the information to the terminal device. "Receiving information from ... (a terminal device)" may be understood as that a source end of the information is the terminal device, and may include directly or indirectly receiving the information from the terminal device. Necessary processing, such as format changing, may be performed on the information between the source end at which the information is sent and the destination end, but the destination end may understand valid information from the source end.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of this application essentially or all or a part of the technical solutions may be implemented in the form of a software product. The software product is stored in a storage medium and includes several instructions for instructing a device (which may be a single-chip microcomputer, a chip or the like) or a processor (processor) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
receiving first indication information from a network device, wherein the first indication information indicates a terminal device to report a power loss factor corresponding to a port configured for the terminal device, and the power loss factor corresponding to the port indicates a power difference between the port and a first port; and
sending second indication information to the network device, wherein the second indication information indicates the power loss factor corresponding to the port configured for the terminal device.

2. The method according to claim 1, wherein the method further comprises:
sending capability information to the network device, wherein the capability information indicates that the terminal device supports reporting of the power loss factor corresponding to the port configured for the terminal device.

3. The method according to claim 2, wherein
the capability information comprises third indication information, and the third indication information indicates a maximum value of the power loss factor corresponding to the port configured for the terminal device.

4. The method according to any one of claims 1 to 3, wherein
the first port is a reference port; or
the first port is a neighboring port of the port.

5. The method according to any one of claims 1 to 4, wherein the method further comprises:
receiving fourth indication information from the network device, wherein the fourth indication information indicates the first port.

6. The method according to any one of claims 1 to 4, wherein the method further comprises:
sending fifth indication information to the network device, wherein the fifth indication information indicates the first port.

7. The method according to any one of claims 1 to 6, wherein the sending the second indication information to the network device comprises:
performing power compensation on an uplink reference signal corresponding to one or more ports of the terminal device, to determine transmit power corresponding to each port;
determining, based on the transmit power corresponding to each port and transmit power corresponding to the first port, a power loss factor corresponding to each port; and
sending the second indication information to the network device based on the power loss factor corresponding to each port.

8. A communication method, comprising:
sending first indication information to a terminal device, wherein the first indication information indicates the terminal device to report a power loss factor corresponding to a port configured for the terminal device, and the power loss factor corresponding to the port indicates a power difference between the port and a first port; and
receiving second indication information from the terminal device, wherein the second indication information indicates the power loss factor corresponding to the port configured for the terminal device.

9. The method according to claim 8, wherein the sending the first indication information to the terminal device comprises:
receiving a power headroom report from the terminal device, wherein the power headroom report indicates power headroom or a power headroom range; and
sending the first indication information to the terminal device when determining that the power headroom or the power headroom range meets a first condition.

10. The method according to claim 9, wherein that the power headroom or the power headroom range meets the first condition comprises:
the power headroom is less than a first threshold;
a minimum value of the power headroom range is less than a second threshold; or
a maximum value of the power headroom range is less than a third threshold.

11. The method according to claim 10, wherein
the first threshold, the second threshold, or the third threshold is predefined; or
the first threshold, the second threshold, or the third threshold is determined based on a maximum value of the power loss factor corresponding to the port configured for the terminal device.

12. The method according to any one of claims 8 to 11, wherein before the sending the first indication information to the terminal device, the method further comprises:
receiving capability information from the terminal device, wherein the capability information indicates that the terminal device supports reporting of the power loss factor corresponding to the port configured for the terminal device.

13. The method according to claim 12, wherein
the capability information comprises third indication information, and the third indication information indicates the maximum value of the power loss factor corresponding to the port configured for the terminal device.

14. The method according to any one of claims 8 to 13, wherein
the first port is a reference port; or
the first port is a neighboring port of the port.

15. The method according to any one of claims 8 to 14, wherein the method further comprises:
sending fourth indication information to the terminal device, wherein the fourth indication information indicates the first port.

16. The method according to any one of claims 8 to 14, wherein the method further comprises:
receiving fifth indication information from the terminal device, wherein the fifth indication information indicates the first port.

17. The method according to any one of claims 8 to 16, wherein the method further comprises:
performing power compensation on an uplink reference signal from the terminal device based on the power loss factor.

18. A communication apparatus, comprising:
a transceiver module, configured to receive first indication information from a network device, wherein the first indication information indicates a terminal device to report a power loss factor corresponding to a port configured for the terminal device, and the power loss factor corresponding to the port indicates a power difference between the port and a first port, wherein
the transceiver module is further configured to send second indication information to the network device, wherein the second indication information indicates the power loss factor corresponding to the port configured for the terminal device.

19. The apparatus according to claim 18, wherein
the transceiver module is further configured to send capability information to the network device, wherein the capability information indicates that the terminal device supports reporting of the power loss factor corresponding to the port configured for the terminal device.

20. The apparatus according to claim 19, wherein
the capability information comprises third indication information, and the third indication information indicates a maximum value of the power loss factor corresponding to the port configured for the terminal device.

21. The apparatus according to any one of claims 18 to 20, wherein
the first port is a reference port; or
the first port is a neighboring port of the port.

22. The apparatus according to any one of claims 18 to 21, wherein
the transceiver module is further configured to receive fourth indication information from the network device, wherein the fourth indication information indicates the first port.

23. The apparatus according to any one of claims 18 to 21, wherein
the transceiver module is further configured to send fifth indication information to the network device, wherein the fifth indication information indicates the first port.

24. The apparatus according to any one of claims 18 to 23, wherein
a processing module is configured to perform power compensation on an uplink reference signal corresponding to one or more ports of the terminal device, to determine transmit power corresponding to each port;
the processing module is further configured to determine, based on the transmit power corresponding to each port and transmit power corresponding to the first port, a power loss factor corresponding to each port; and
the transceiver module is further configured to send the second indication information to the network device based on the power loss factor corresponding to each port.

25. A communication apparatus, comprising:
a transceiver module, configured to send first indication information to a terminal device, wherein the first indication information indicates the terminal device to report a power loss factor corresponding to a port configured for the terminal device, and the power loss factor corresponding to the port indicates a power difference between the port and a first port, wherein
the transceiver module is further configured to receive second indication information from the terminal device, wherein the second indication information indicates the power loss factor corresponding to the port configured for the terminal device.

26. The apparatus according to claim 25, wherein
the transceiver module is further configured to receive a power headroom report from the terminal device, wherein the power headroom report indicates power headroom or a power headroom range; and
the transceiver module is further configured to send the first indication information to the terminal device when a processing module determines that the power headroom or the power headroom range meets a first condition.

27. The apparatus according to claim 26, wherein that the power headroom or the power headroom range meets the first condition comprises:
the power headroom is less than a first threshold;
a minimum value of the power headroom range is less than a second threshold; or
a maximum value of the power headroom range is less than a third threshold.

28. The apparatus according to claim 27, wherein
the first threshold, the second threshold, or the third threshold is predefined; or
the first threshold, the second threshold, or the third threshold is determined based on a maximum value of the power loss factor corresponding to the port configured for the terminal device.

29. The apparatus according to any one of claims 25 to 28, wherein
the transceiver module is further configured to receive capability information from the terminal device, wherein the capability information indicates that the terminal device supports reporting of the power loss factor corresponding to the port configured for the terminal device.

30. The apparatus according to claim 28, wherein
the capability information comprises third indication information, and the third indication information indicates the maximum value of the power loss factor corresponding to the port configured for the terminal device.

31. The apparatus according to any one of claims 25 to 30, wherein
the first port is a reference port; or
the first port is a neighboring port of the port.

32. The apparatus according to any one of claims 25 to 31, wherein
the transceiver module is further configured to send fourth indication information to the terminal device, wherein the fourth indication information indicates the first port.

33. The apparatus according to any one of claims 25 to 31, wherein
the transceiver module is further configured to receive fifth indication information from the terminal device, wherein the fifth indication information indicates the first port.

34. The apparatus according to any one of claims 25 to 33, wherein
the processing module is configured to perform power compensation on an uplink reference signal from the terminal device based on the power loss factor.

35. A communication apparatus, wherein the communication apparatus comprises a processor, and the processor is configured to run a computer program or instructions, to cause the communication apparatus to perform the communication method according to any one of claims 1 to 7 or perform the communication method according to any one of claims 8 to 17.

36. A computer-readable storage medium, wherein the computer-readable storage medium stores computer instructions or a program, and when the computer instructions or the program runs on a computer, the communication method according to any one of claims 1 to 7 is performed, or the communication method according to any one of claims 8 to 17 is performed.

37. A computer program product, wherein the computer program product comprises computer instructions, and when a part or all of the computer instructions are run on a computer, the communication method according to any one of claims 1 to 7 is performed, or the communication method according to any one of claims 8 to 17 is performed.
